# FASCICULE DE BREVET EUROPEEN

(11) **EP 0 456 574 B1**
(45) Date de publication et mention de la délivrance du brevet: **11.01.1995**
(21) Numéro de dépôt: 91401197.8
(22) Date de dépôt: 07.05.1991
(51) Int. Cl.: B60R 7/05

(54) **Pare-soleil pour véhicule automobile**
Sonnenblende für Kraftfahrzeug
Sun visor for motor vehicles

(30) Priorité: 11.05.1990 FR 9005934
(43) Date de publication de la demande: 13.11.1991
(73) Titulaire: ROCKWELL AUTOMOTIVE BODY SYSTEMS-FRANCE EN ABREGE:ROCKWELL ABS-FRANCE, 88360 Rupt sur Moselle (FR)
(72) Inventeur: Prillard, Charles B., F-88360 Rupt sur Moselle (FR)
(74) Mandataire: Hasenrader, Hubert

(56) Documents cités:
- EP-A- 0 289 473
- DE-U- 7 106 961
- GB-A- 1 099 694
- US-A- 3 809 428
- PATENT ABSTRACTS OF JAPAN vol. 8, no. 16 (M-270)(1453) 24 janvier 1984

## Description

La présente invention concerne un pare-soleil pour véhicule automobile du type présentant, sur ses faces, une bande transversale susceptible de retenir un objet plat que l'on glisse entre ladite bande et la face adjacente dudit pare-soleil, ladite bande transversale faisant le tour complet dudit pare-soleil et les deux extrémités de ladite bande étant liées entre elles.

Elle concerne plus particulièrement un pare-soleil du type mentionné ci-dessus et qui est formé par un noyau rigide enfermé dans une housse en tissu.

Il est demandé de recouvrir un pare-soleil de véhicule automobile avec le revêtement qui est utilisé pour habiller la face interne du pavillon du véhicule. Ceci permet de donner au véhicule un bel aspect. Il est également connu de prévoir sur au moins l'une des faces du pare-soleil une bande transversale fixée au pare-soleil à chacune de ses extrémités et qui s'applique parfaitement contre la face adjacente du pare-soleil de manière à pouvoir servir de système de retenue d'un objet plat, une carte de parking ou de péage par exemple, que l'on glisse entre ladite bande et la face correspondante du pare-soleil.

Cette bande est, de préférence, réalisée dans le matériau servant au revêtement du pare-soleil et du pavillon. Chacune de ses extrémités est fixée sur le pare-soleil. De préférence, le pare-soleil est recouvert sur chacune de ses faces d'une pièce de recouvrement, et les lèvres de ces deux pièces sont assemblées par soudure, collage ou couture, le long des bords du pare-soleil. Les extrémités de la bande sont, en général, insérées entre deux lèvres desdites pièces et fixées à celles-ci par soudure, collage ou couture, selon le type de matériau de revêtement utilisé. Ceci nécessite donc pour le montage de chaque extrémité de bande, une opération de positionnement entre les deux lèvres et une opération de soudure ou de couture. Ladite bande est soumise à un effort de traction lors de la mise en place d'objets entre ladite bande et la face correspondante du pare-soleil. On constate que la répétition de ces manoeuvres peut entraîner un arrachage de l'extrémité de la bande sur l'un des bords du pare-soleil.

Le brevet US-A-3 809 428 a proposé d'équiper le pare-soleil avec un brassard rapporté et réalisé en un matériau élastique pour que ce brassard puisse s'adapter sur plusieurs types de pare-soleil. Ce brassard comporte des poches ou d'autres moyens pour accrocher des objets. L'inconvénient de ce brassard est qu'il n'est pas intimement relié au pare-soleil, et, du fait de son élasticité, il est généralement réalisé en un matériau différent du matériau recouvrant le noyau du pare-soleil, ce qui peut nuire à l'esthétisme de l'habitacle.

GB-A-1099694 montre également un pare-soleil équipé d'un brassard dont les extrémités sont liées entre elles, sans être liées au pare-soleil.

Le but de la présente invention est de pallier ces inconvénients et de proposer un pare-soleil dans lequel la bande transversale est solidement fixée au pare-soleil.

Le but est atteint selon l'invention par le fait que les deux extrémités de bande sont liées audit pare-soleil, le long d'un bord longitudinal dudit pare-soleil.

Grâce à cette structure, la bande transversale a la forme d'un brassard dont les extrémités peuvent être intimement liées pour assurer sa solidité. Le lien entre ce brassard proprement dit et le revêtement du pare-soleil ne supporte plus les efforts de traction qui sont provoqués par l'écartement de la bande transversale et du pare-soleil. De plus, cette solution permet de disposer d'un moyen de maintien d'objets sur chaque face du pare-soleil.

Selon un mode de réalisation avantageux, le pare-soleil est constitué d'un noyau rigide enfermé dans une housse en tissu réalisée à partir d'une poche obtenue à l'aide de deux pièces en tissu destinées à recouvrir respectivement une face dudit noyau, lesdites pièces étant assemblées entre elles le long de trois côtés de manière à ménager une ouverture sur le quatrième côté pour l'introduction dudit noyau. Les extrémités de ladite bande sont alors insérées entre les côtés assemblés entre eux de ladite poche.

D'autres caractéristiques et avantages de l'invention ressortiront à la lecture d'un mode de réalisation fait à titre d'exemple et en référence aux dessins annexés sur lesquels :

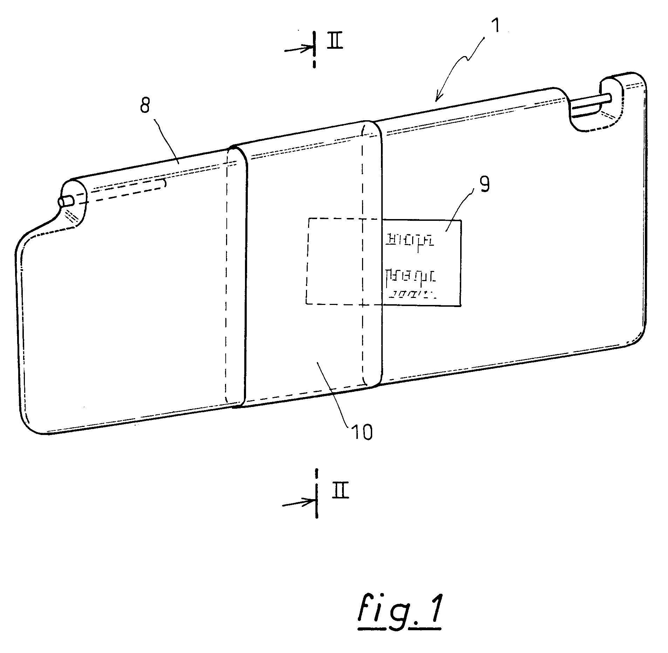

- la figure 1 montre en perspective, un pare-soleil comportant une bande de retenue de cartes selon l'invention, et

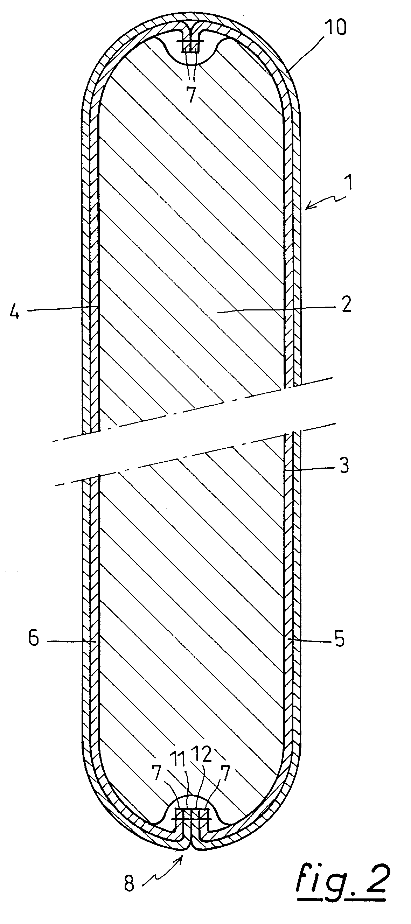

- la figure 2 montre une coupe dudit pare-soleil selon la ligne II-II de la figure 1.

Le pare-soleil 1, pour véhicule automobile, représenté sur le dessin, est constitué d'un noyau rigide 2 recouvert sur ses deux faces 3 et 4 par deux pièces de revêtement 5 et 6 réalisées dans le matériau de revêtement servant à l'habillage de la face intérieure du pavillon du véhicule, les bords ou lèvres 7 desdites pièces 5 et 6 étant assemblés entre eux le long des bords 8 du pare-soleil 1, soit par soudure, soit par collage, soit par couture selon la nature du matériau constituant les pièces 5 et 6.

Ce pare-soleil 1 comporte, selon l'invention, des moyens pour retenir un objet plat 9, tel qu'une carte de parking ou de péage. Ces moyens sont constitués par une bande transversale 10 qui entoure complètement le pare-soleil 1. Cette bande 10 est réalisée de préférence avec la matériau constituant le revêtement du pare-soleil 1 et elle est, si nécessaire, renforcée par doublage du côté de sa face interne en contact avec le pare-soleil 1 avec une feuille d'un matériau rigide ou flexible adapté à l'usage.

La bande 10 peut être également fabriquée dans un matériau différent de celui utilisé pour réaliser les deux pièces de revêtement 5 et 6. Mais elle est de préférence faite à partir de tissu, ou d'un matériau élastique ou d'un matériau rigide transparent.

Les deux extrémités 11 et 12 de la bande 10 sont solidement fixées entre elles de telle manière que la bande 10 se présente sous la forme d'un brassard, et elles sont en même temps assemblées aux deux pièces de revêtement 5 et 6 de préférence au droit d'un bord longitudinal 8.

Selon un mode de réalisation préféré, le matériau formant les pièces de revêtement 5 et 6 est une matière textile, un tissu par exemple, et le noyau 2 est enfermé dans une housse en tissu obtenue en fermant l'ouverture d'une poche formée par lesdites pièces de revêtement qui sont assemblées entre elles par couture le long de trois côtés de manière à ménager ladite ouverture sur le quatrième côté. Dans ce cas, les extrémités 11 et 12 de la bande 10 sont insérées entre les lèvres 7 des pièces 5 et 6 et sont cousues en même temps que ces pièces 5 et 6 lors de la fabrication de la poche, lesdites pièces 5 et 6 étant disposées face externe contre face externe.

## Revendications

1. Pare-soleil pour véhicule automobile du type présentant, sur ses faces (3, 4), une bande transversale (10) susceptible de retenir un objet plat (9) que l'on glisse entre ladite bande (10) et la face correspondante (3, 4) dudit pare-soleil (1), ladite bande transversale (10) faisant le tour complet dudit pare-soleil (1) et les deux extrémités (11, 12) de ladite bande (10) étant liées entre elles, caractérisé en ce que lesdites deux extrémités sont liées audit pare-soleil (1) le long d'un bord longitudinal (8) dudit pare-soleil.

2. Pare-soleil selon la revendication 1, du type comportant un noyau rigide (2) enfermé dans une housse en tissu réalisée à partir d'une poche obtenue à l'aide de deux pièces (5, 6) en tissu destinées à recouvrir respectivement une face (3, 4) dudit noyau (2), lesdites pièces (5, 6) étant assemblées entre elles le long de trois côtés de manière à ménager une ouverture sur le quatrième côté pour l'introduction dudit noyau (2),
les extrémités (11, 12) de ladite bande (10) étant insérées entre deux côtés assemblés entre eux, de ladite poche.

## Claims

1. Sun-visor for motor-vehicles of the type having, on its faces (3, 4) a transversal strip (10) adapted to hold a flat object (9) which is slipped in between said strip (10) and the corresponding face (3, 4) of said sun-visor (1), said transversal strip (10) encircling completely said sun-visor (1), and the two ends (11, 12) of said strip (10) being joined together, characterized in that said two ends are joined to said sun-visor (1) along one longitudinal edge (8) of said sun-visor.

2. Sun-visor according to claim 1, of the type comprising a rigid core (2) enclosed in a fabric cover made from a bag obtained with two pieces (5, 6) of fabric intended for covering respectively one face (3, 4) of said core (2), said pieces (5, 6) being assembled together on three sides so as to provide an opening on the fourth side for introducing said core (2), the ends (11, 12) of said strip (10) being inserted between two sides assembled together, of said bag.

## Patentansprüche

1. Sonnenblende für ein Kraftfahrzeug von dem Typ, der an seinen Seiten (3, 4) ein querverlaufendes Band (10) aufweist, mit dem ein flacher Gegenstand (9) gehalten werden kann, der zwischen das Band (10) und die entsprechende Seite (3, 4) der Sonnenblende (1) eingeschoben wird, wobei das querverlaufende Band (10) vollständig um die Sonnenblende (1) herum verläuft und die beiden Enden (11, 12) des Bandes (10) mit einander verbunden sind,
dadurch **gekennzeichnet,** daß
besagte beiden Enden mit der Sonnenblende (1) entlang einer Längskante (8) der Sonnenblende verbunden sind.

2. Sonnenblende nach Anspruch 1, von dem Typ, der einen steifen Kern (2) aufweist, der in eine Gewebehülle eingeschlossen ist, die aus einem mittels zweier zum Abdecken jeweils einer Seite (3, 4) des Kerns (2) vorgesehener Gewebestücke (5, 6) erhaltenen Beutel gefertigt ist, wobei die Teile (5, 6) miteinander entlang von drei Kanten verbunden sind, um eine Öffnung an der vierten Kante für die Einführung des Kerns (2) zu bilden, und wobei die Enden (11, 12) des Bandes (10) zwischen zwei miteinander verbundenen Kanten des Beutels eingefügt sind.
